# EUROPÄISCHE PATENTSCHRIFT

(11) **EP 3 275 228 B1**
(45) Veröffentlichungstag und Bekanntmachung des Hinweises auf die Patenterteilung: **08.05.2019**
(21) Anmeldenummer: 16715451.7
(22) Anmeldetag: 24.03.2016
(51) Int. Cl.: H04W 8/20, H04W 4/00

(54) **VERFAHREN ZUM LADEN EINES PROFILS**
METHOD FOR LOADING A PROFILE
PROCÉDÉ DE CHARGEMENT D'UN PROFIL

(30) Priorität: 26.03.2015 DE 102015003977
(43) Veröffentlichungstag der Anmeldung: 31.01.2018
(73) Patentinhaber: Giesecke+Devrient Mobile Security GmbH, 81677 München (DE)
(72) Erfinder: NITSCH, Nils, 85570 Markt Schwaben (DE); HUBER, Ulrich, 81475 München (DE)
(86) Internationale Anmeldenummer: PCT/EP2016/000522
(87) Internationale Veröffentlichungsnummer: WO 2016/150574

(56) Entgegenhaltungen:
- WO-A1-2014/171707
- Gsm Association: "Remote Provisioning Architecture for Embedded UICC Technical Specification Version 2.0", , 13. Oktober 2014 (2014-10-13), XP055262151, Gefunden im Internet: URL:http://www.gsma.com/connectedliving/wp -content/uploads/2014/10/SGP02-Remote-Prov isioning-Architecture-for-Embedded-UICC-Te chnical-Specification-v2.0.pdf [gefunden am 2016-04-01]
- PARK JAEMIN ET AL: "Secure Profile Provisioning Architecture for Embedded UICC", 2013 INTERNATIONAL CONFERENCE ON AVAILABILITY, RELIABILITY AND SECURITY, IEEE, 2. September 2013 (2013-09-02), Seiten 297-303, XP032524210, DOI: 10.1109/ARES.2013.40 [gefunden am 2013-11-06]

## Beschreibung

### Gebiet der Erfindung

Die Erfindung betrifft ein Verfahren zum Laden eines Profils für eine Mobilfunk-Subskription (Subskriptions-Profils) in ein Teilnehmeridentitätsmodul.

### Stand der Technik

Im Rahmen des Einrichtens eines Teilnehmeridentitätsmoduls muss ein Subskriptions-Profil in das Teilnehmeridentitätsmodul geladen werden. Änderungswünsche am Subskriptions-Profil (oder auch kurz nur Profil) erfordern das Bereitstellen eines geänderten Subskriptions-Profils. Bei Plug-In-SIM-Karten kann die Änderung durch Austausch der SIM-Karte durchgeführt werden. Alternativ wird ein neues Subskriptions-Profil in das Teilnehmeridentitätsmodul geladen, was besonders für festeingelötete Teilnehmeridentitätsmodule durchgeführt wird, die nicht ohne Weiteres ausgetauscht werden können. Das Verwalten von Subskriptionen, insbesondere durch Herunterladen von Subskriptions-Profilen und begleitenden Daten in ein eUICC, wird im Allgemeinen auch als Subscription Management bezeichnet.

Die technischen Spezifikationen [1] 12FAST.13 - Embedded SIM Remote Provisioning Architecture 17 December 2013", GSMA, und [2] SGP02-Remote-Provisioning-Architecture-for-Embedded-UICC-Technical-Specification-v2.0, 13 October 2014, GSMA, beschreiben das Herunterladen und Installieren eines Subskriptions-Profils in ein eUICC. [1] 12FAST.13, Kap. 3 beschreibt Rollen und Funktionen, mittels derer ein Profil von einem Subscription Management Secure Router SM-SR in ein eUICC geladen und dort installiert wird. Eine Funktion ist ein im eUICC installierter ausführbarer Programmcode, der sich durch ein der Funktion entsprechendes Kommando, das an das eUICC gesandt wird, zur Ausführung bringen lässt. [2] SGP02, Kap. 3 beschreibt den protokollarischen Ablauf beim Herunterladen und Installieren eines Subskriptions-Profils in ein eUICC.

Gemäß [1] 12FAST.13 Kap. 3.3.1.2.2 "Profile Download and Installation Function" wird mit einer "Download" Funktion ein Profil in das eUICC heruntergeladen. Über "Download" hinaus sind beim Profil-Herunterladen jedoch weitere, begleitende Funktionen durchzuführen. Gemäß [1] 12FAST.13 Kap. 3.3.1.3.1 "ISD-P Creation Function" und [2] SGP02, Kap. 3.1.1 "ISD-P Creation" werden "Create" Funktionen angewandt, um im eUICC eine Dateistruktur, insbesondere die ISD-P, anzulegen. Gemäß [2] SGP02, Kap. 3.1.3 "Download an Installation of the Profile" wird nach Anlegen der ISD-P ein Profil heruntergeladen und in der Dateistruktur, insbesondere der ISD-P, abgespeichert. Gemäß [1] 12FAST.13 Kap. 3.3.1.2.3 "Profile Content Update Function" und 3.3.1.2.4 "Policy Rules Update Function" werden "Update" Funktionen angewandt, um Aktualisierungen entsprechend dem neu heruntergeladenen Profil vorzunehmen. Gemäß [1] 12FAST.13 Kap. 3.3.1.3.4 "Profile Enabling Function" und [2] SGP02, Kap. 3.2 "Profile Enabling" werden "Enable" Funktionen durchgeführt, um ein heruntergeladenes Profil zu aktivieren, insbesondere eine ISD-P, und hierdurch für den Nutzer des eUICC verwendbar zu machen.

Gemäß [1], [2] sind somit, zusätzlich zur "Download" Funktion, mit der ein Profil in ein eUICC heruntergeladen wird, zumindest die drei zusätzlichen Funktionen "Create", "Update" und "Enable" anzuwenden. Jede dieser Funktionen muss kostenpflichtig über eine OTA (over-the-air) Verbindung vom SM-SR an das eUICC aufgerufen bzw. gesendet werden. Hieraus ergibt sich, dass, um 10 Kilobyte Profildaten in ein eUICC herunterzuladen schätzungsweise mindestens 20 Kilobyte (also ungefähr doppelt so viel) an Daten vom SM-SR OTA an das eUICC gesendet werden müssen.

Wünschenswert wäre eine Lösung zum Verwalten von Subskriptions-Profilen, bei welcher die Menge der an das Teilnehmeridentitätsmodul gesendeten Daten, insbesondere der zusätzlich zu den eigentlichen Profildaten gesendeten Daten, reduziert ist.

Das Dokument DE 10 2012 018 540 A1 aus dem Stand der Technik offenbart ein Teilnehmeridentitätsmodul mit zwei Subskriptions-Profilen, zwischen denen geschaltet werden kann. Somit kann ein Subskriptionswechsel weitgehend ohne OTA Übertragung von Daten vorgenommen werden.

### Zusammenfassung der Erfindung

Der Erfindung liegt die Aufgabe zu Grunde, ein Verfahren zum Laden eines Profils für eine Mobilfunk-Subskription (Subskriptions-Profils) in ein Teilnehmeridentitätsmodul zu schaffen, das die OTA an das Teilnehmeridentitätsmodul zu übertragende Datenmenge reduziert.

Die Aufgabe wird gelöst durch ein Verfahren nach Anspruch 1. Vorteilhafte Ausgestaltungen der Erfindung sind in den abhängigen Ansprüchen angegeben.

Das Verfahren nach Anspruch 1 beruht auf Grundgedanken, dass das Profil in einem einzelnen ausführbaren Programmcode-Modul in das Teilnehmeridentitätsmodul geladen wird. Sobald nach dem Laden ein erstes (Kommunikations-)APDU-Kommando beim Teilnehmeridentitätsmodul eintrifft, was irgendwann zwangsläufig der Fall ist, wird das Programmcode-Modul ausgeführt und dadurch das Profil installiert. Das Senden von spezifischen Installations-Kommandos wie "Create", "Update" und "Enable", an einzelne Elementardateien (Elementary Files EFs) des Teilnehmeridentitätsmoduls, womit herkömmlicherweise ein Profil installiert wird, ist nicht erforderlich.

Genauer umfasst das Verfahren die Schritte: a) Bereitstellen eines Profils beim Daten-Aufbereitungs-Server; b) Erzeugen eines einzelnen ausführbaren Programmcode-Moduls (Binary Large Object BLOB) des gemäß a) bereitgestellten Profils, das so eingerichtet ist, dass durch Ausführen des ausführbaren Programmcode-Moduls das Profil im Teilnehmeridentitätsmodul installiert wird; c') Laden des einzelnen ausführbaren Programmcode-Moduls in das Teilnehmeridentitätsmodul, um das Profil zu laden.

Daher ist gemäß Anspruch 1 ein Verfahren zum Profil-Laden mit reduzierter OTA Datenmenge geschaffen.

Ein Verfahren zum Installieren eines nach Anspruch 1 geladenen Profils im Teilnehmeridentitätsmodul, umfasst entsprechend die folgenden Schritte: d) Senden eines APDU-Kommandos (bevorzugt kein Installations-Kommando) vom Daten-Aufbereitungs-Server an das Teilnehmeridentitätsmodul; in Reaktion auf einen Empfang des APDU-Kommandos beim Teilnehmeridentitätsmodul, Ausführen des ausführbaren Programmcode-Moduls und durch das Ausführen Installieren des Profils im Teilnehmeridentitätsmodul.

Das ausführbare Programmcode-Modul ist wahlweise als Applikations-Programm gestaltet ist, insbesondere als Java Applet, insbesondere als Java Applet im cap.file Format. Die CPU des Teilnehmeridentitätsmoduls führt in Reaktion auf das erste (oder evtl. auch ein anderes) eingehende APDU-Kommando den Programmcode aus und installiert hierdurch das Profil im Teilnehmeridentitätsmodul.

Alternativ ist das ausführbare Programmcode-Modul als Speicherabbild des Profils gestaltet, oder als eine Kombination eines auf dem Teilnehmeridentitätsmodul installierten, vom Profil unabhängigen Programmcodes (z.B. eines universellen Interpreters) mit einem Speicherabbild des Profils. In Reaktion auf das erste (oder evtl. auch ein anderes) eingehende APDU-Kommando wird das Speicherabbild entfaltet und hierdurch das Profil installiert, bzw. der unabhängige Programmcode (z.B. Interpreter) interpretiert das Speicherabbild und installiert hierdurch das Profil.

Der Schritt c') des Ladens des Programmcode-Moduls umfasst wahlweise die folgenden Unterschritte: c'1) Laden des ausführbaren Programmcode-Moduls vom Daten-Aufbereitungs-Server in einen Sicherheits-Router (z.B. Subscription Management Secure Router SM-SR); c'2) Laden des ausführbaren Programmcode-Moduls vom Sicherheits-Router (SM-SR) in das Teilnehmeridentitätsmodul.

Wahlweise ist Schritt a) gestaltet als: a) Bereitstellen des Profils von einem Netzbetreiber-Server an den Daten-Aufbereitungs-Server.

### Kurze Beschreibung der Zeichnungen

Im Folgenden wird die Erfindung an Hand von Ausführungsbeispielen und unter Bezugnahme auf die Zeichnungen näher erläutert, in der zeigen:
- Fig. 1: die Abbildung [2] Kap. 3.1.1 Fig. 10 aus dem Stand der Technik;
- Fig. 2: den grundlegenden Ablauf des Ladens und Installierens eines ausführbaren Programmcode-Moduls BLOB, um ein Profil zu laden und zu installieren, gemäß einer Ausführungsform der Erfindung.

### Detaillierte Beschreibung von Ausführungsbeispielen

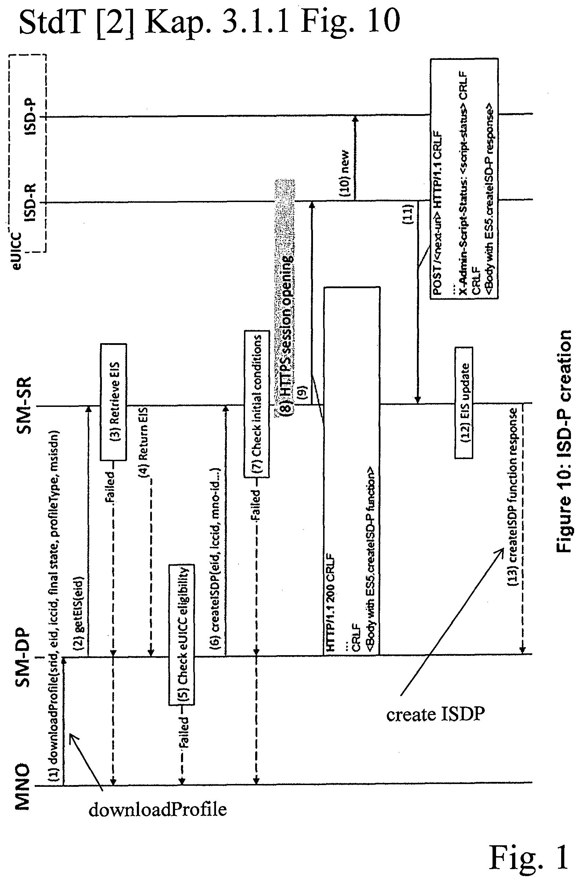

Fig. 1 zeigt die Abbildung [2] Kap. 3.1.1 Fig. 10 aus dem Stand der Technik. Ein Netzbetreiber MNO lädt über die SubMan Data Preparation SM-DP und den SubMan Secure Router SM-SR in einer Vielzahl von Schritten mit Funktionen "download" und "create ISDP" ein Profil in ein Teilnehmeridentitätsmodul eUICC herunter. Durch Aufruf der "download" Funktion wird auch die Ausführung der "CreateISDP" Funktion provoziert, um eine Dateistruktur anzulegen, in die später Profildaten heruntergeladen werden können. [2] Kap. 3.1.3 Fig. 12 zeigt das eigentliche Herunterladen von Profildaten nach dem Anlegen der Dateistruktur ISD-P.

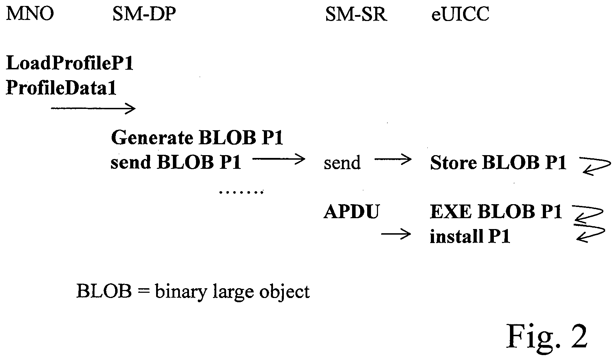

Fig. 2 zeigt den grundlegenden Ablauf des Ladens und Installierens eines ausführbaren Programmcode-Moduls BLOB (Binary Large OBject), um ein Profil P1 in ein Teilnehmeridentitätsmodul eUICC zu laden und dort zu installieren, gemäß einer Ausführungsform der Erfindung. Der Server eines Netzbetreibers MNO (Mobile Network Operator) stellt Profilstruktur und Profildaten eines Profils P1 an den SubMan Data Preparation SM-DP Server bereit, mit der Aufforderung, das Profil P1 in das Teilnehmeridentitätsmodul eUICC zu laden. Der SubMan Data Preparation SM-DP Server erzeugt (Pseudocode Generate) zu dem Profil P1 ein ausführbares Programmcode-Modul BLOB P1 und sendet (Pseudocode send) es an den SubMan Secure Router SM-SR, welcher das ausführbares Programmcode-Modul BLOB P1 an das Teilnehmeridentitätsmodul eUICC weitersendet. Das Teilnehmeridentitätsmodul eUICC speichert das ausführbare Programmcode-Modul BLOB. Zu irgendeinem Zeitpunkt sendet der SubMan Secure Router SM-SR ein erstes APDU-Kommando an das Teilnehmeridentitätsmodul eUICC. In Reaktion wird das ausführbare Programmcode-Modul BLOB entfaltet. Je nach Art des ausführbaren Programmcode-Moduls BLOB geschieht das Entfalten durch Ausführen des Applet (Fig. 2: Pseudocode EXE für execute), Implementieren oder Interpretieren des Speicherabbilds etc. Hierdurch wird das Profil P1 im Teilnehmeridentitätsmodul eUICC installiert.

### Zitierter Stand der Technik

[1] 12FAST.13 - Embedded SIM Remote Provisioning Architecture 17 December 2013, GSMA
[2] SGP02-Remote-Provisioning-Architecture-for-Embedded-UICC-Technical-Specification-v2.0, 13 October 2014, GSMA
[3] DE 10 2012 018 540 A1

## Patentansprüche

1. Verfahren zum Laden eines Profils (P1) für eine Mobilfunk-Subskription von einem Daten-Aufbereitungs-Server (SM-DP) in ein Teilnehmeridentitätsmodul (eUICC), umfassend die Schritte:
a) Bereitstellen eines Profils (P1) beim Daten-Aufbereitungs-Server (SM-DP);
c) Laden des Profils (P1) in das Teilnehmeridentitätsmodul (eUICC);
**gekennzeichnet durch die Schritte:**
b) Erzeugen eines einzelnen ausführbaren Programmcode-Moduls (BLOB) des gemäß a) bereitgestellten Profils (P1), das so eingerichtet ist, dass in Reaktion auf einen Empfang des APDU-Kommandos beim Teilnehmeridentitätsmodul (eUICC) das ausführbare Programmcode-Modul (BLOB) ausgeführt wird, wodurch das Profil (P1) im Teilnehmeridentitätsmodul (eUICC) installiert wird;
c') Durchführen des Schritts c) durch Laden des einzelnen ausführbaren Programmcode-Moduls (BLOB) in das Teilnehmeridentitätsmodul (eUICC).

2. Verfahren zum Installieren eines nach Anspruch 1 geladenen Profils (P1) im Teilnehmeridentitätsmodul (eUICC), umfassend die Schritte:
d) Senden eines APDU-Kommandos vom Daten-Aufbereitungs-Server (SM-SP) an das Teilnehmeridentitätsmodul (eUICC);
e) in Reaktion auf den Empfang des APDU-Kommandos beim Teilnehmeridentitätsmodul (eUICC), Ausführen des ausführbaren Programmcode-Moduls (BLOB), wodurch das Profil (P1) im Teilnehmeridentitätsmodul (eUICC) installiert wird.

3. Verfahren nach Anspruch 1 oder 2, wobei das ausführbare Programmcode-Modul (BLOB) als Applikations-Programm gestaltet ist, insbesondere als Java Applet, insbesondere als Java Applet im cap.file Format.

4. Verfahren nach Anspruch 1 oder 2, wobei das ausführbare Programmcode-Modul (BLOB) als Speicherabbild des Profils (P1) gestaltet ist oder als eine Kombination eines auf dem Teilnehmeridentitätsmodul (eUICC) installierten, vom Profil (P1) unabhängigen Programmcodes (Interpreter) mit einem Speicherabbild des Profils (P1).

5. Verfahren nach einem der Ansprüche 1 bis 4, wobei c') die folgenden Unterschritte umfasst:
c'1) Laden des ausführbaren Programmcode-Moduls (BLOB) vom Daten-Aufbereitungs-Server (SM-DP) in einen Sicherheits-Router (SM-SR);
c'2) Laden des ausführbaren Programmcode-Moduls (BLOB) vom Sicherheits-Router (SM-SR) in das Teilnehmeridentitätsmodul (eUICC).

6. Verfahren nach einem der Ansprüche 1 bis 5, wobei Schritt a) gestaltet ist:
a) Bereitstellen des Profils (P1) von einem Netzbetreiber-Server (MNO) an den Daten-Aufbereitungs-Server (SM-DP).

## Claims

1. A method for loading a profile (P1) for a mobile radio subscription from a data preparation server (SM-DP) into a subscriber identity module (eUICC), comprising the steps:
a) providing a profile (P1) at the data preparation server (SM-DP);
c) loading the profile (P1) into the subscriber identity module (eUICC);
**characterized by the steps:**
b) generating a single executable program code module (BLOB) of the profile (P1) provided according to a), which program code module is arranged such that in reaction to a reception of the APDU command at the subscriber identity module (eUICC) the executable program code module (BLOB) is executed, thereby installing the profile (P1) in the subscriber identity module (eUICC);
c') performing the step c) by loading the single executable program code module (BLOB) into the subscriber identity module (eUICC).

2. A method for installing a profile (P1), which was loaded according to claim 1, in the subscriber identity module (eUICC), comprising the steps:
d) sending an APDU command from the data preparation server (SM-SP) to the subscriber identity module (eUICC);
e) in reaction to the reception of the APDU command at the subscriber identity module (eUICC), executing the executable program code module (BLOB), thereby installing the profile (P1) in the subscriber identity module (eUICC).

3. The method according to claim 1 or 2 wherein the executable program code module (BLOB) is configured as an application program, in particular as a Java applet, in particular as a Java applet in the cap.file format.

4. The method according to claim 1 or 2, wherein the executable program code module (BLOB) is configured as a memory image of the profile (P1) or as a combination of a program code (interpreter) which is independent of the profile (P1) and installed on the subscriber identity module (eUICC) with a memory image of the profile (P1).

5. The method according to any of claims 1 to 4, wherein c') comprises the following substeps:
c'1) loading the executable program code module (BLOB) from the data preparation server (SM-DP) into a secure router (SM-SR);
c'2) loading the executable program code module (BLOB) from the secure router (SM-SR) into the subscriber identity module (eUICC).

6. The method according to any of claims 1 to 5, wherein step a) is configured:
a) providing the profile (P1) from a network operator server (MNO) to the data preparation server (SM-DP).

## Revendications

1. Procédé de chargement d'un profil (P1) pour un abonnement de radiocommunication mobile d'un serveur de conditionnement de données (SM-DP) dans un module d'identité d'abonné (eUICC), comprenant les étapes :
a) mise à disposition d'un profil (P1) au serveur de conditionnement de données (SM-DP) ;
c) chargement du profil (P1) dans le module d'identité d'abonné (eUICC) ;
**caractérisé par les étapes :**
b) génération d'un module individuel de code de programme exécutable (BLOB) du profil (P1) qui est mis à disposition conformément à a) et qui est conçu de telle manière que, en réaction à une réception de l'instruction APDU au module d'identité d'abonné (eUICC), le module de code de programme exécutable (BLOB) est exécuté, ce par quoi le profil (P1) est installé dans le module d'identité d'abonné (eUICC) ;
c') exécution de l'étape c) par chargement du module individuel de code de programme exécutable (BLOB) dans le module d'identité d'abonné (eUICC).

2. Procédé d'installation d'un profil (P1) chargé selon la revendication 1 dans le module d'identité d'abonné (eUICC), comprenant les étapes :
d) envoi d'une instruction APDU par le serveur de conditionnement de données (SM-SP) au module d'identité d'abonné (eUICC) ;
e) en réaction à la réception de l'instruction APDU au module d'identité d'abonné (eUICC), exécution du module de code de programme exécutable (BLOB), ce par quoi le profil (P1) est installé dans le module d'identité d'abonné (eUICC).

3. Procédé selon la revendication 1 ou 2, cependant que le module de code de programme exécutable (BLOB) est réalisé en tant que programme d'application, en particulier en tant qu'applet Java, en particulier en tant qu'applet Java dans le format cap.file.

4. Procédé selon la revendication 1 ou 2, cependant que le module de code de programme exécutable (BLOB) est réalisé en tant qu'image mémoire du profil (P1) ou en tant qu'une combinaison entre un code de programme (Interpreter) indépendant du profil (P1), installé sur le module d'identité d'abonné (eUICC), et une image mémoire du profil (P1).

5. Procédé selon une des revendications de 1 à 4, cependant que c') comprend les sous-étapes suivantes :
c'1) chargement du module de code de programme exécutable (BLOB) du serveur de conditionnement de données (SM-DP) dans un routeur de sécurité (SM-SR) ;
c'2) chargement du module de code de programme exécutable (BLOB) du routeur de sécurité (SM-SR) dans le module d'identité d'abonné (eUICC).

6. Procédé selon une des revendications de 1 à 5, cependant que l'étape a) est réalisée :
a) mise à disposition du profil (P1) d'un serveur d'opérateur de réseau (MNO) au serveur de conditionnement de données (SM-DP).
